# EUROPEAN PATENT APPLICATION

(11) **EP 1 260 923 A1**
(43) Date of publication of application: **27.11.2002**
(21) Application number: 02011559.8
(22) Date of filing: 24.05.2002
(51) Int. Cl.: G06F 17/60

(54) **Apparatus repairing method, system, program and recording medium**

(30) Priority: 24.05.2001 JP 2001155469
(71) Applicant: Ricoh Company, Ltd., Tokyo 143-8555 (JP)
(72) Inventor: Iyonaga, Kazutoshi, Green Heim 3B 202,, Yokohama-shi, Kanagawa 226-0025 (JP); Mizuguchi, Akira, Ichikawa-shi, Chiba 272-0142 (JP); Suzuki, Emi, Kawasaki-shi, Kanagawa 211-0012 (JP); Miyashita, Yoshiyuki, Velarge Okurayama 110, Yokohama-shi, Kanagawa 222-0031 (JP); Hori, Akira, Fukutani building 5F-B, Taito-ku 111-0051 (JP)
(74) Representative: Schwabe - Sandmair - Marx

(57) **Abstract**

When a client needs to repair an apparatus, a person in charge for transportation in a sales company visits the client to reccivc the apparatus. The sales company repairs the apparatus. When the sales company cannot repair the received apparatus, the sales company commissions the apparatus to a third party. The sales company returns the repaired apparatus to the client. A system for managing this service has a database (6,7) which registers information on apparatuses held by said client even for those apparatuses which are to be repaired at different sections; and a server (1) which accepts a repair request made by each client, acquires information on the apparatus to be repaired by referring to said database (6,7) and executes a processes of receiving the apparatus, repairing the apparatus, and returning the repaired apparatus to said client.

## Description

The present invention relates to a repairing system and repair service provision assisting system which can manage the execution of a service for repairing various kinds of apparatuses.

In an office, for example, multiple OA (Office Automation) apparatuses (computers, a server, a facsimile, a copying machine and their peripheral devices) are generally used. When an OA apparatus fails, an equipment manager needs to the check maker of the failed apparatus, then check the service section of the maker and further make inquiries at the service section about the failure, repair and so forth and send the failed apparatus to a service center. Such a work is however troublesome and is inconvenient to the users of apparatuses.

Accordingly, it is an object of the invention to facilitate the maintenance and management of a plurality of apparatuses.

It is another object of the invention to provide a capability to realize a repair service for apparatuses of a plurality of makers through a single window or windows (a customer support window or windows).

It is still another object of the invention to provide a single repair service which can totally repair various apparatuses of a plurality of makers, which have been traditionally repaired by the plurality of makers or their subsidiaries, individually.

To achieve the objects, according to one aspect of the invention, there is provided an apparatus repairing method for executing a repair service of registering clients and apparatuses held by the clients in a database, receiving an apparatus to be repaired designated by a client and delivering the apparatus to be repaired after repair in accordance with a request made by the client, characterized by comprising:
a step of allowing a plurality of apparatuses which arc to be repaired at different sections to be registered in the database as apparatuses to be subjected to the repair service;
a step of coping with a repair request made by each client at a predetermined window organ (a predetermined customer window or windows) regardless of a section that repairs an apparatus to be repaired whose repair has been requested; and
a step of executing a process of extracting a repair section for the apparatus to be repaired by referring to the database and further executing a process of receiving the apparatus to be repaired from the client using information registered in the database, a process of arranging repair and a process of delivering a repaired apparatus to the client, in response to the repair request made by the client.

To achieve the objects, according to another aspect of the invention, there is provided a repair service provision assisting system for executing a repair service of receiving an apparatus to be repaired from a client, repairing the apparatus to be repaired and delivering the repaired apparatus to the client in accordance with a request made by the client, characterized by comprising:
a database which registers information on apparatuses held by the client even for those apparatuses which are to be repaired at different sections; and
a server which accepts a repair request made by each client, acquires information on an apparatus to be repaired by referring to the database and executes a process of receiving the apparatus to be repaired, a process of repairing the apparatus to be repaired and a process of delivering a repaired apparatus to the client.

These objects and other objects and advantages of the present invention will become more apparent upon reading of the following detailed description and the accompanying drawings in which:
Fig. 1 is a diagram for explaining the structure of a repair service provision assisting system according to a first embodiment of the invention;
Fig. 2 is a diagram for explaining service applying procedures in the repair service provision assisting system according to the first embodiment;
Fig. 3 is a diagram for explaining the outline of a repairing routine according to the first embodiment;
Fig. 4 is a diagram for explaining the repair process according to the first embodiment;
Fig. 5 is a structural diagram of a repair service provision assisting system according to a second embodiment of the invention;
Fig. 6 is a diagram showing the structure of an ASP system shown in Fig. 5;
Fig. 7 is a diagram showing the structure of a client DB shown in Fig. 6;
Fig. 8 is a diagram showing the structure of a maker DB shown in Fig. 6;
Fig. 9 is a diagram showing the structure of an apparatus DB shown in Fig. 6;
Figs. 10A and 10B are diagrams showing the structure of a repair information DB shown in Fig. 6;
Fig. 11 is a diagram exemplifying the top screen that is provided by the ASP system in Fig. 5;
Fig. 12 is a diagram exemplifying a registration screen provided by the ASP system in Fig. 5; and
Fig. 13 is a diagram exemplifying a repair request screen provided by the ASP system in Fig. 5.

A "repair service" according to a first embodiment of the invention will be elaborated below.

The "repair service" in this embodiment means a service which receives and repairs apparatuses owned by clients in accordance with requests made by the clients.

The "repair service" receives requests to repair apparatuses, regardless of their types and makers, from different clients through a single window (a single customer support window), and carries out a collective work of receiving and repairing the apparatuses and delivering repaired apparatuses. With this service, each client need not perform maintenance and management of apparatuses type by type or maker by maker and can carry out rational maintenance of apparatuses.

The repair service can be provided by contract at, for example, a fixed annual or monthly fee. Clients can use the repair service by paying the standard charge for each repair occurred in addition to the fixed fee. The fixed fee may be set in such a way as to differ depending on whether the total of the purchase prices of apparatuses (hardware) is higher a predetermined amount (e.g., 750 dollars/year) or not. Alternatively, different fixed fees may be respectively set for different price ranges.

When a client makes a repair request, the repair service provider sends a person in charge to the client to receive an apparatus to be repaired, causes the person in charge to repair it and retum (bring back) the repaired apparatus to the client. The repair service provider is, for example, the operation management organ of a repair service provision assisting system or its agency.

According to the repair service, it is predetermined by contract that each client, for example, should separate (disconnect) an apparatus to be repaired from other apparatuses which are connected to the former apparatus and should connect a repaired apparatus to such other apparatuses.

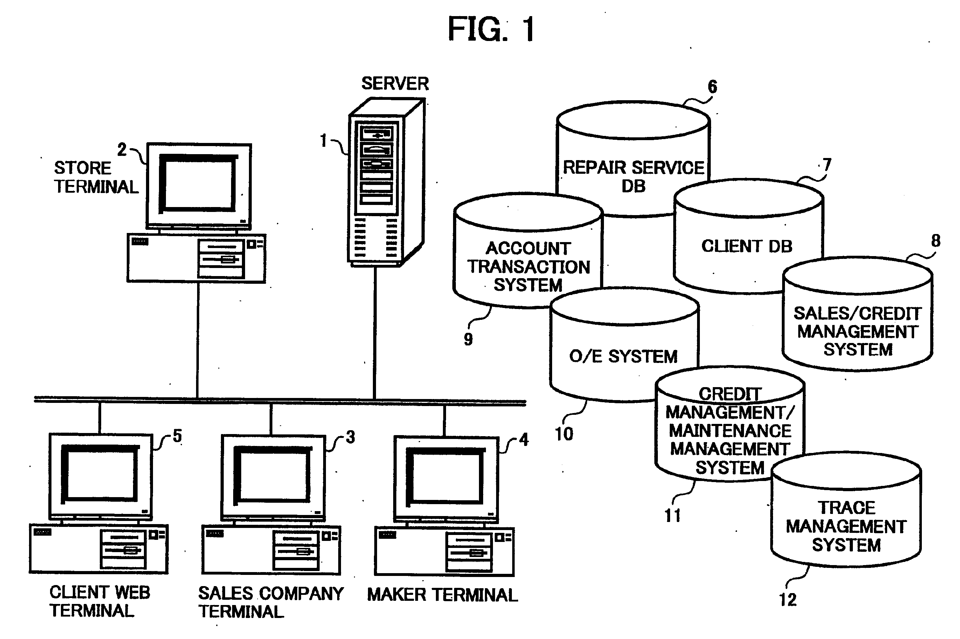

Fig. 1 is a diagram for explaining an example of the structure of a repair service provision assisting system according to the first embodiment.

The repairing system shown in Fig. 1 comprises a terminal 2 of a store, a terminal 3 of an apparatus sales company, a terminal 4 of a maker who manufactures apparatuses, and a client Web terminal 5. The store terminal 2 and the sales company terminal 3 are windows (customer support windows) to clients. Those terminals are connected together in such a way as to exchange data on a Web over a network NW.

A server 1 is placed on the network NW. The server 1 is connected with various databases and systems (repair service DB (database) 6, client DB 7, sales/credit management system 8, account transaction system 9, O/E (order entry) system 10, credit management/maintenance management system 11 and trace management DB 12).

Although the system in Fig. 1 has been illustrated as a data transmitting/receiving system using the Web, the system may be constructed in such a way as to function on groupware which operates over, for example, LAN or WAN.

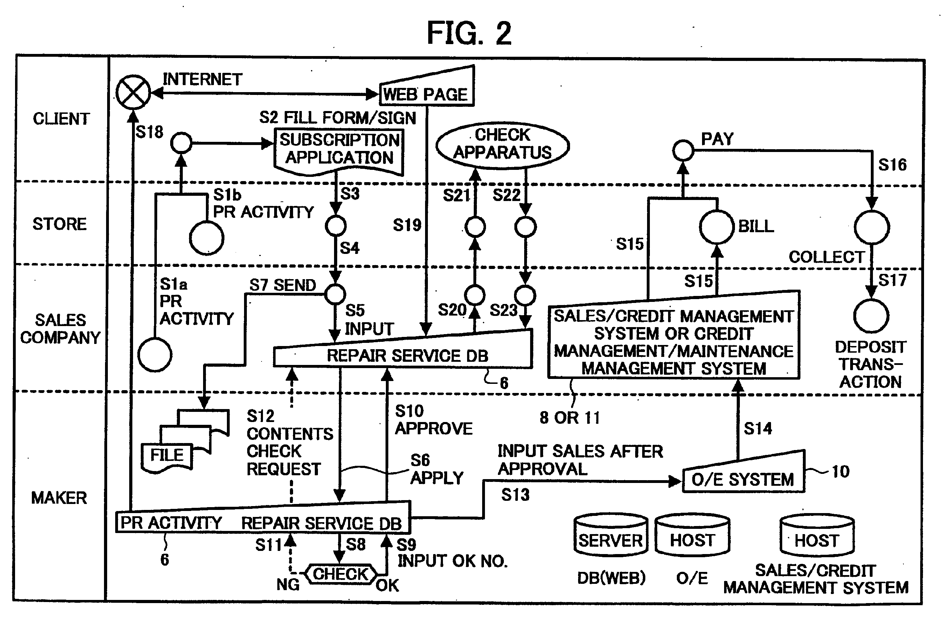

Fig. 2 is a diagram for explaining service applying procedures in the repair service provision assisting system according to the embodiment. As shown in Fig. 2, first, a sales company or a store carries out a PR activity of a service for receiving and repairing apparatuses with respect to target clients (steps S1a and S1b).

A client who wants to use the repair service fills a "subscription application" where necessary and signs (step S2), and submits the subscription application to a nearest store (step S3). The store checks the contents of the submitted subscription application and sends the subscription application to the sales company (step S4).

The sales company that has received the subscription application registers the filled contents of the subscription application in a store terminal "repair service DB" 6 via a Web (step S5). Accordingly, an application to the repair service is made to a maker via the Web (step S6). The sales company keeps a copy of the subscription application sent from the store and sends the original to the maker (step S7). The maker files the original subscription application (step S7).

The repair service DB 6 opens a Web page which advertises the service for a PR (Public Relations) activity (stop S18). The Web page includes a form for subscription application.

A client who sees the Web page and wants to subscribe for the repair service fills a subscription application form linked to the Web page where necessary (step S19). The repair service DB 6 notifies the sales company or store of the filled contents of the subscription application form by e-mail or the like (step S20).

A person in charge at the notified sales company or store visits the client who has submitted the subscription application and checks the statuses of apparatuses subjected to a contract as needed (step S21). In case where, for example, the person in charge decides that something is the matter with the contents of the application, the person in charge notifies the applicant of the declination of the application. In case where the person in charge decides that the contents of the application are accurate, the person in charge operates the store terminal 2 or the sales company terminal 3 to register confirmation information indicating that the contents of the application have been confirmed (steps S22 and S23). The person in charge corrects the contents of the application when needed.

In response to the registration of the confirmation information, the repair service DB 6 notifies the maker of the contents of the application (step S6).

A person in charge at the maker operates the maker terminal 4 to check the notified contents of the subscription application (step S8). When the person in charge at the maker decides that nothings is wrong with the contents, the person in charge inputs an approval number to the repair service DB 6 (step S9). In response to the entry of the approval number, the repair service DB 6 issues information indicating "approved" (OK) to the sales company by e-mail or the like (step S10). if the person in charge at the maker decides in the approval process of step S8 that something is the matter with the contents, the person in charge inputs information of "disapproved" (NG) to the repair service DB 6 (step S11). In response to the entry of the NG information, the repair service DB 6 issues a request to check the contents to the sales company (step S12). The person in charge at the sales company that has received the contents check request checks the contents of the subscription application with the person who filled the application or somebody and corrects the subscription application when needed.

In order to receive and place orders for goods, the maker has an order entry system 10 (e.g., a FAX order entry system which connects a facsimile to a personal computer to recognize slips and receive and place orders for goods).

After approval in step S10, the person in charge at the maker inputs sales information to the O/E system 10 based on the application information registered in the repair service DB 6 (step S13). The O/E system 10 transmits the sales information to a sales/credit management system 8 (or a credit management/maintenance management system 11) in operation at the sales company (step S14). The sales/credit management system 8 issues a bill for an amount which is the charge from the maker plus a commission of the sales company and sends the bill to the client (step S15). The client who has received the bill pays the billed amount to the sales company (step S16). The sales company pays the charge made by the maker to the maker (step S17).

When the client changes the contents of the application, the client writes the contents to be changed in a prepared report to change the contents of the apparatus receipt and repair service and performs a process similar to the process for the subscription application through the contents change report.

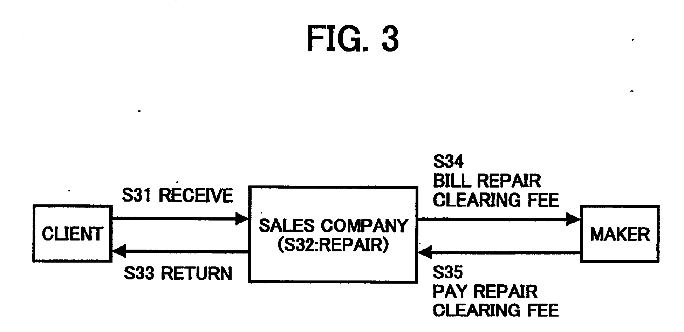

Fig. 3 is a diagram for explaining the outline of a repairing routine at the time an apparatus subjected to the repair service and held by a client needs repair.

In case where an apparatus held by a client and subjected to the repair service needs repair, the client requests a repair of the apparatus to the sales company by telephone or FAX. In response to the request, a person in charge of delivery at the sales company goes to the client and receives the apparatus to be repaired (step S31). The sales company repairs the received apparatus. In case where the sales company cannot repair the received apparatus, however, the sales company commissions the repair to a third party (step S32). The sales company returns the apparatus that has been repaired to the client (step S33).

The sales company that has completed the reception and repair of the apparatus and the returning of the apparatus to the client bills the maker for a repair clearing fee (step S34). The maker pays the repair clearing fee to the sales company (step S35). The repair clearing fee is the total of a commission for the reception, repair and returning of the apparatus done by the sales company and the actual bring-in and repair fee. The actual bring-in and repair fee is the total of a repair service fee and the fixed price for used parts in case where, for example, the maker (or a company or the like related to the maker) does the repair, or it is the actual price for the repair in case where the maker commissions the repair to a third party.

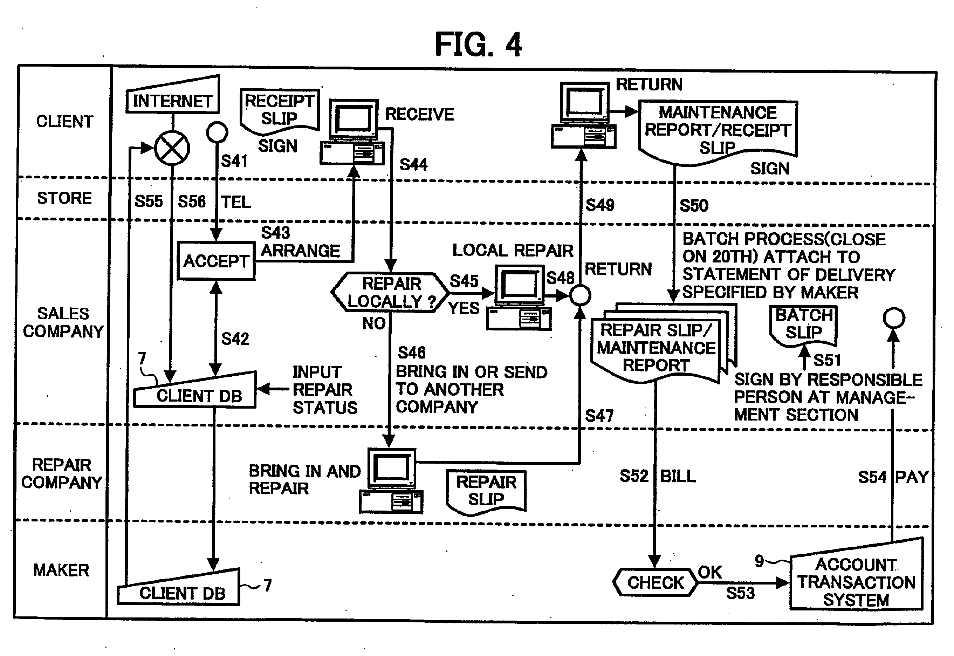

Fig. 4 is a diagram for explaining the repair process at the time an apparatus held by a client who made a contract for the repair service needs repair. Fig. 4 exemplifies a case where a sales company carries out a sequence of works processes from the acceptance of a repair request from a client to the returning of a repaired apparatus and billing the fee. First, the sales company accepts a repair request from a client by telephone, FAX or e-mail (step S41).

The person in charge at the sales company enters the contents of the request to the client DB 7 and checks the operational status or the like of the repair section of the sales company during a period, such as a period over which the apparatuses will be held by the client or a lease period (step S42). Thereafter, the person in charge arranges reception of an apparatus to be repaired from the client on the Web (step S43). At this time, in case where the apparatus to be repaired is a type that holds data, such as a personal computer, it is requested that the client should have backed up the data.

In case where the sales company or maker receives the repair request from the client on the Web (steps S55 and S56), the sales company or maker checks the operational status or the like of the repair section during a period, such as a period over which the apparatuses will be held by the client or a lease period and then carries out arrangement for reception of an apparatus to be repaired from the client on the Web (instruction or the like to the person in charge of reception) (step S43).

The person in charge of reception at the sales company visits the client and receives the apparatus to be repaired (step S44). At this time, the person in charge fills apparatus information and accessory information of the apparatus to take back in an apparatus receipt slip or a maintenance report for the apparatus to be repaired and asks the client to sign it.

The person in charge of reception who has received the apparatus to be repaired brings in or sends the apparatus to the repair section his or her own company or another company (steps S45 and S46). Note that the sales company is billed with the repair fee at the repair section by a contract or the like made beforehand. In case where a company other than the sales company does a repair, for example, that company does not directly bill the client for the repair fee but the sales company which is a window to the client bills the client for the charge.

In case where it the period for the complete repair of the apparatus received from the client and returning the repaired apparatus to the client is expected to become long, the sales company notifies the client of such information by e-mail or the like.

The apparatus that has been repaired at the repair section of the local company or another company is shipped, together with a repair slip, to a delivery section of the sales company (steps S47 and S48). A person in charge at the delivery section of the sales company delivers the repaired apparatus to the client (step S49).

The person in charge who has delivered the repaired apparatus to the client gets the sign of the client on the maintenance report or the receipt slip as reception confirmation information. In case where the apparatus to be repaired is a personal computer, for example, it is requested that the client should install necessary software and data. The signed maintenance report or the receipt slip is sent to the sales company (step S50).

The person in charge at the sales company processes the signed maintenance report or the receipt slip every predetermined period (e.g., closing on 20th every month) and prepares a batch slip. A responsible person who has the right to approve at the management section of the sales company checks the prepared batch slip and approve it if the contents arc adequate (step S51). The sales company attach the signed maintenance report or the receipt slip approved to a statement of delivery (repair slip) and sends it together with a bill to the maker (step S52)

The person in charge at the maker receives the statement of delivery and the attached document, checks the contents and inputs data to the account transaction system 9 in operation at the maker if nothings is wrong with the contents (step S53). The account transaction system 9 pays the billed amount to the sales company in accordance with the input data (step S54). The person in charge at the maker inputs the progress for each of the process from the reception of the apparatus to the returning thereof into the trace management DB 12 to ensure effective management.

The repair progress status registered in the trace management DB 12 may be open to the public on the Web after undergoing a security measure so that each client can confirm the progress of the repairing work of the apparatus to be repaired. Further, a service to provide a replacement apparatus may be set as a pay optional menu so that a replacement apparatus is lent to a client who applies for the menu within a repair period, thus enhancing the usability of the client.

A visit and repair service may be set as another optional menu so that the visit and repair service is carried out for a client who applies for the menu. In the visit and repair service, apparatuses to be repaired may be limited.

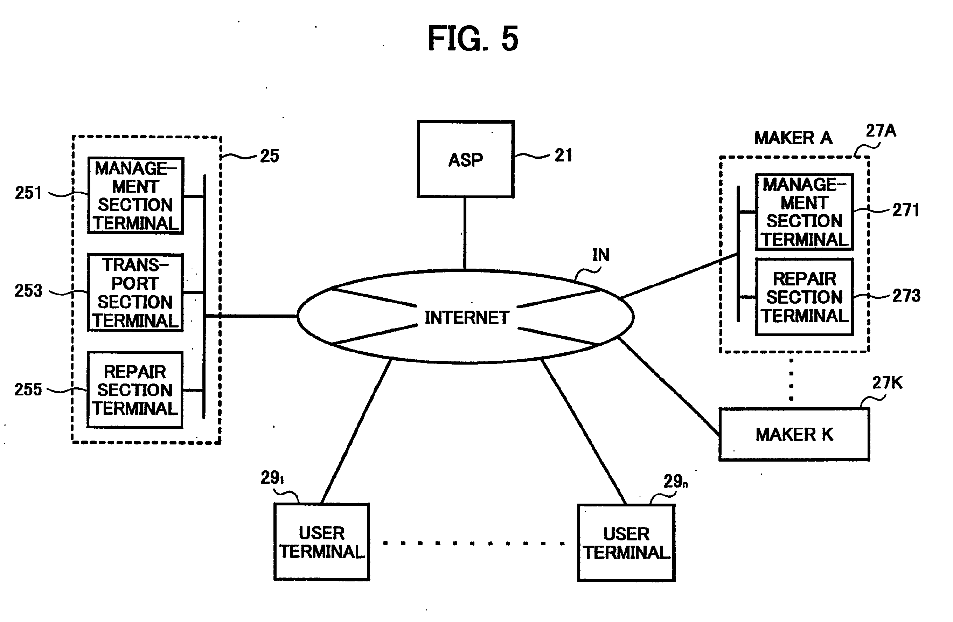

Fig. 5 is a structural diagram of a repair service provision assisting system according to the second embodiment of the invention.

As shown in Fig. 5, the repair service provision assisting system comprises an ASP (Application Service Provider) system 21, a system 25 of a contract repair company, systems 27 (27a to 27k) of a plurality of makers of apparatuses to be repaired and user terminals 29 (29₁ to 29ₙ).

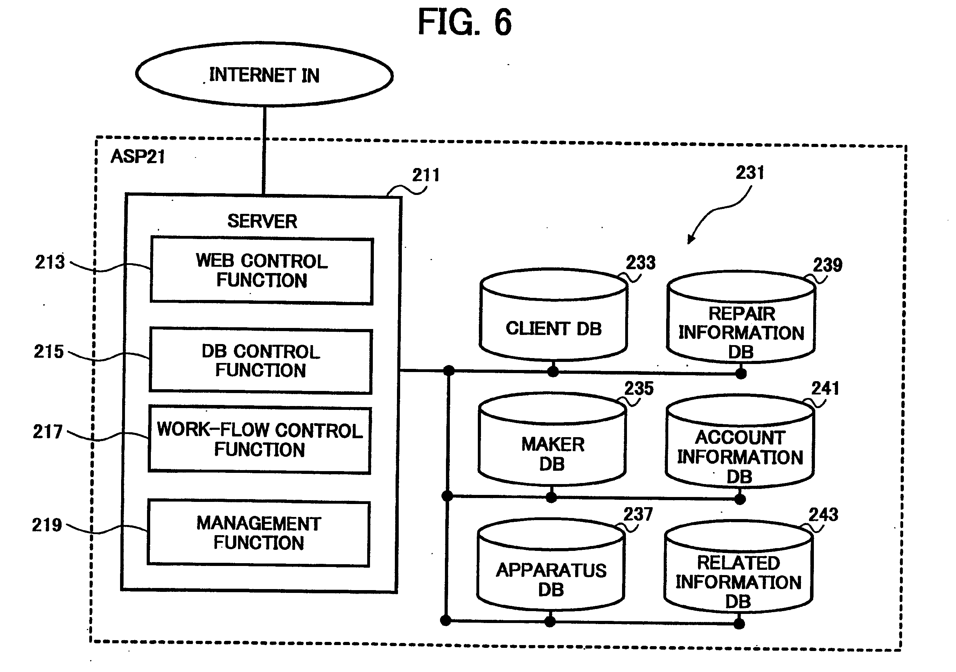

The ASP system 21 has a server 211 and databases 231, as shown in Fig. 6. The server 211 has a Web control function 213, a DB control function 215, a work-flow control function 217 and a management function 219. The Web control function 213 is a function to create a synthesized Web page (home page) and makes the Web page open to the public on an Internet IN or acquire information entered on the Web page. The DB control function 215 is a function to access and update the databases 231. The work-flow control function 217 is a function to manage the work flows among multiple apparatuses that constitute the repair service provision assisting system. The management function 219 is a function to manage the works of the general operation of the repair service provision assisting system, such as accounting, billing and payment.

The server 211 need not be physically comprised of a single server unit, but may be comprised of a plurality of server units.

The databases 231 include a client DB 233, a maker DB 235, an apparatus DB 237, a repair information DB 239, a account information DB 241 and a related information DB 243.

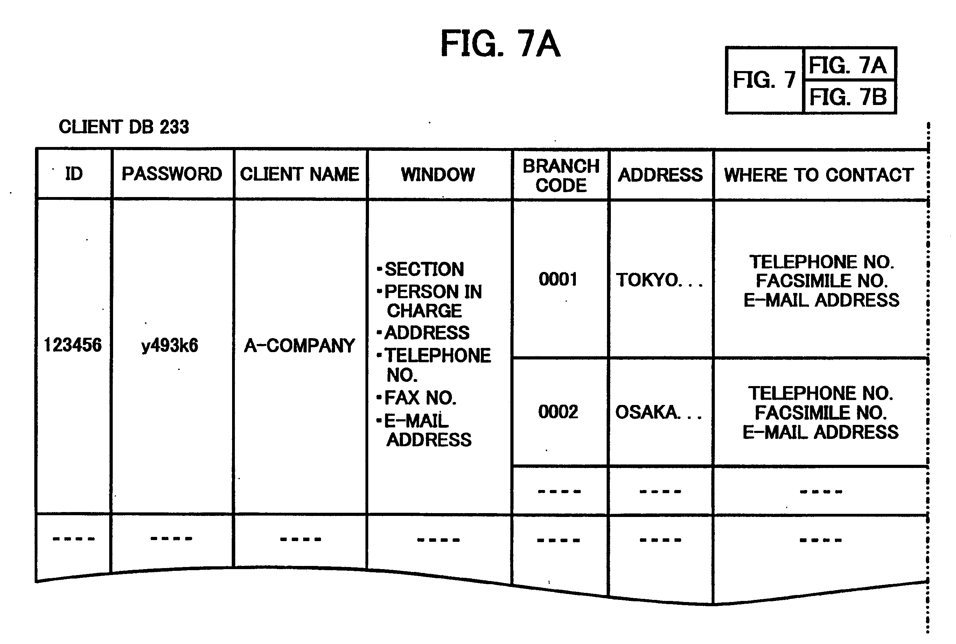

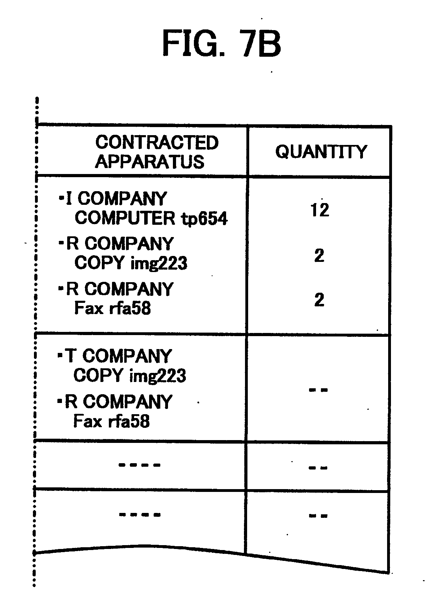

As shown in Fig. 7, registered in the client DB 233 is information, such as IDs of individual clients, passwords, client names, window (in charge) information, branch codes, and the address, place of contact, contracted apparatuses and quantities thereof for each branch. The ID and password are numbered and registered at the time the subscription application is made. The window information is information on a section which becomes the window (in charge) of the repair service provision assisting system and the place of contact of the section. The branch code is assigned to each of branches in case where each client has a plurality of branches (the locations of apparatuses to be repaired). The address and the place of contact for each branch are the address and the place of contact of each branch (telephone number, FAX number, e-mail address and so forth). The item "contracted apparatuses" is information on apparatuses to be repaired that have been contracted branch by branch.

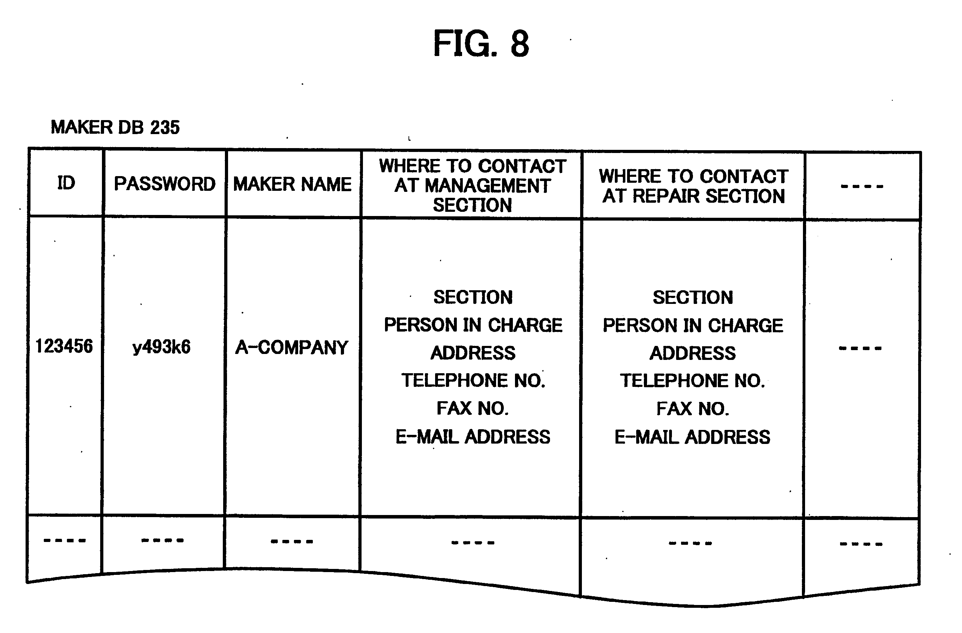

As shown in Fig. 8, the maker DB 235 stores information, such as the address, the person in charge and the place of contact of the repair section of each maker, together with the ID and password of that maker.

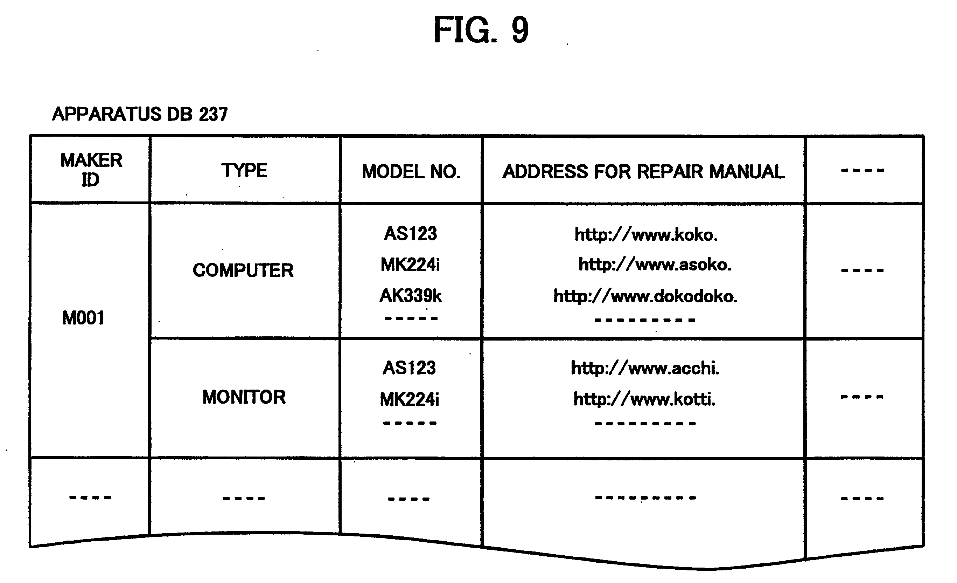

As shown in Fig. 9, the apparatus DB 237 stores information which specifies individual apparatuses to be repaired and the address of an area where repair manuals for the apparatuses are stored.

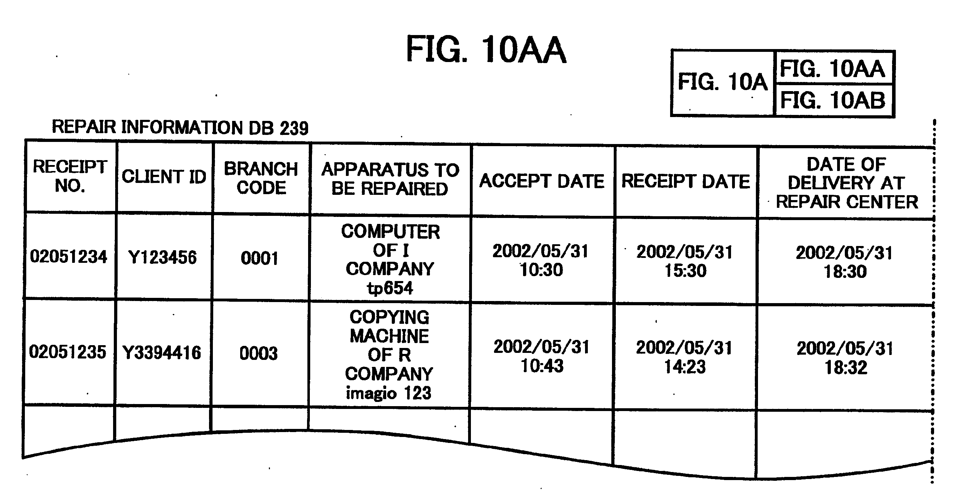

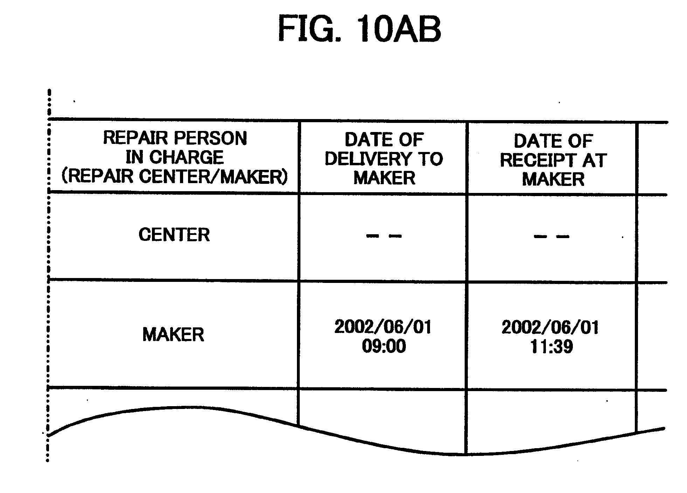

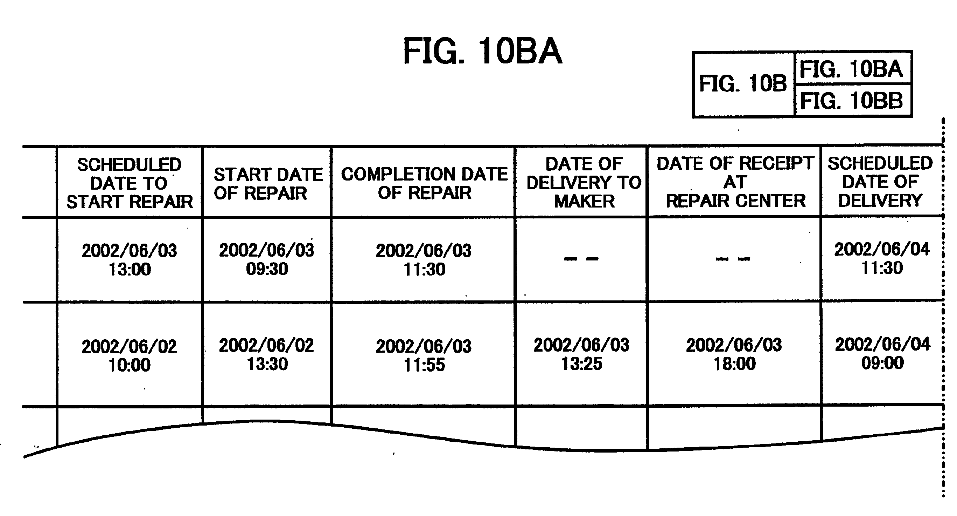

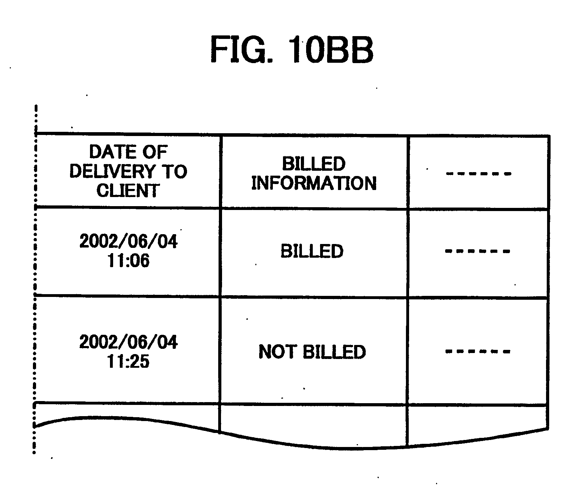

As shown in Figs. 10A and 10B, registered in the repair information DB 239 for each repair request are an "accept number", "client ID", "branch code", "apparatus to be repaired", "accept date", "receipt date", "date of delivery at repair center", "repair person in charge", "date of delivery to maker", "date of receipt at maker", "scheduled date to start repair", "start date of repair", "completion date of repair", "date of delivery to maker", "date of receipt at repair center", "scheduled date of delivery", "date of delivery to client" and "bill information".

The "accept number" is a number specific to the requested repair. The "client ID" is the ID of the client who has made the repair request. The "branch code" is the code of the branch of the client who has made the repair request. The "apparatus to be repaired" is information that specifies apparatuses whose repair has been requested and is comprised of information, such as a maker, type, model number and production year. The "accept date" is the date on which the repair request has been accepted. The "receipt date" is the date on which a person in charge of transport has received the apparatus whose repair has been requested from the client. The "date of delivery at repair center" is the date on which the apparatus to be repaired received from the client has been brought in the repair center of a contract repair company 25. The "repair person in charge" is a flag which indicates whether the repair is to be carried out at the repair center of the contract repair company 25 or at the maker. The "date of delivery to maker" is the date on which the apparatus to be repaired has been delivered to the maker in case where the repair is to be carried out at the maker. The "date of receipt at maker" is the date on which the apparatus to be repaired has arrived at the maker in case where the repair is to be carried out at the maker. The "scheduled date to start repair" is the date on which the person in charge of repair is scheduled to start repairing. The "start date of repair" is the actual date on which the person in charge of repair has started repairing. The "completion date of repair" is the date on which the repair has completed at the repair center or the maker. The "date of delivery to maker" is the date on which the maker has shipped the apparatus to be repaired to the repair center in case where the maker has done a repair. The "date of receipt at repair center" is the date on which the repair center has received the apparatus to be repaired in case where the maker has repaired the apparatus and has shipped to the repair center. The "scheduled date of delivery" is the date on which the repaired apparatus is scheduled to be delivered to the client. The "date of delivery to client" is the actual date on which the repaired apparatus has been delivered to the client. The "bill information" is information indicating whether a bill for the repair has been issued or not.

The account information DB 241 shown in Fig. 6 stores bill information, deposit information and account information.

Information, such as map information and traffic information is stored in the related information DB 243 in Fig. 6. Those pieces of information are updated adequately based on information on the Internet IN.

As shown in Fig. 5, the contract repair company 25 has a management section terminal 251, a transport section terminal 253 and a repair section terminal 255 provided therein. The management section terminal 251 is used by persons in charge of accounting, general affairs and so forth.

The transport section terminal 253 is used by a person in charge at the transport section. The transport section terminal 253 includes a terminal placed at the repair center and a portable terminal that is carried around by the person in charge of transport. The transport section terminal 253 has a label reader, such as an OCR or a bar code reader. The portable terminal is comprised of a portable telephone which has a capability to connect to a Web, and has a label reader and a label printer.

The repair section terminal 255 is used by a person in charge at the repair section. The repair section terminal 255 has a label reader.

As shown in Fig. 5, a management section terminal 271 and a repair section terminal 273 are provided at each maker 27. The management section terminal 271 is used by persons in charge of accounting, general affairs and so forth.

The repair section terminal 273 is used by a person in charge at the repair section. The repair section terminal 273 has a label reader.

The repair service that uses the system with the above-described structure will be described below.

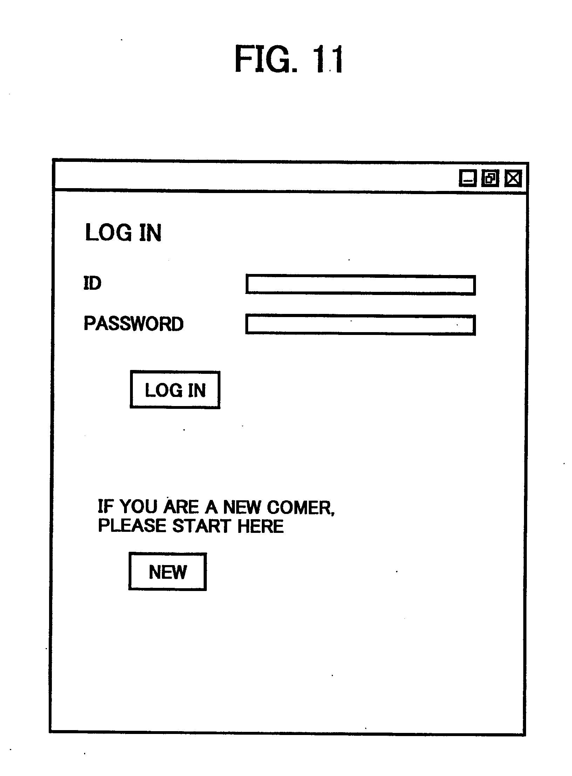

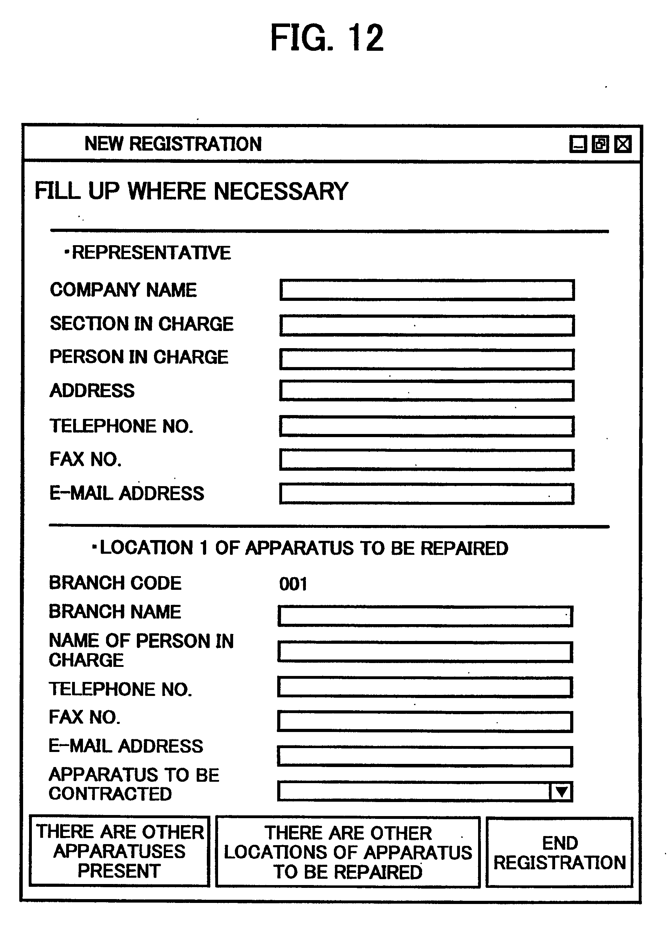

A client who wants to use the repair service operates the user terminal 29 to access the ASP system 21 and selects "New" on the top page as shown in Fig. 11 that is provided by the server 211 of the ASP system 21. Then, the server 211 transmits a registration screen as shown in Fig. 12 to the user terminal 29. The user inputs information, such as a company name, the address and the place of contact of the management section, a branch code (ID code of each branch (the place where apparatuses to be repaired is located), the address and the place of contact of each branch, apparatuses subjected to a contract and the quantity of the apparatuses.

For apparatuses subjected to a contract, the server 211 presents a list of apparatuses registered in the apparatus DB 237 and allows the user to select adequate ones from the list.

The person in charge inputs information on the individual apparatuses at a branch which are to be subjected to a contract on the registration screen. When the entry is completed, the person in charge clicks the "END REGISTRATION" button. In response to this operation, the server 211 sets a user ID and a password and notifies the user terminal 29 of them. Further, the server 211 registers the input contents in the client DB 233 in association with the set user ID and password as shown in Fig. 7.

The person in charge of repair at the contract repair company 25 registers information about apparatuses subjected to the repair service in the apparatus DB 237 and adequately updates the registered information to the latest one.

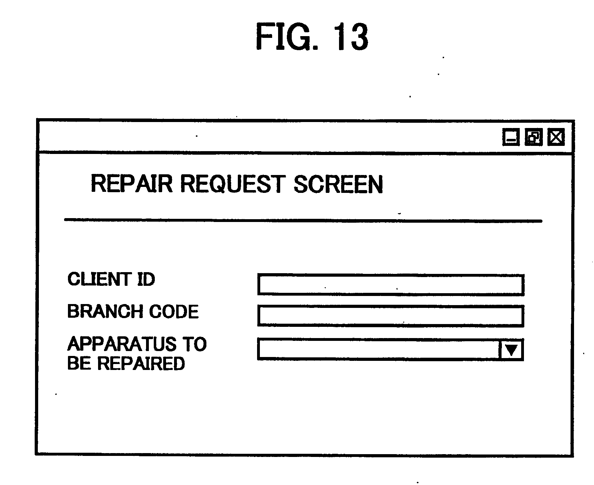

In case where an apparatus held by the client and subjected to the repair service needs repair, the client accesses the ASP system 21 by operating the user terminal 29. The client inputs the ID and password on the top page shown in Fig. 11 that is provided by the server 211 and logs in. The server 211 discriminates if the pair of the input ID and password is registered in the client DB 233. If it is determined that the pair is registered, the server 211 presents the user with a process selection screen. The user selects "REPAIR REQUEST" on the process selection screen. In response to the selection of "REPAIR REQUEST", the server 211 displays a repair request screen shown in Fig. 13.

The user inputs the company ID, branch code and apparatus information which specifies an apparatus to be repaired on the repair request screen. Based on the company ID and the branch code, the server 211 reads apparatuses registered in the client DB 233 for that branch and displays a list of the apparatuses, thus allowing the user to select an adequate one from the list.

The server 211 sets an accept number and adds one record in the repair information DB 239 in association with the accept number. Then, the server 211 registers the input company ID and branch code and information on an apparatus to be repaired and the accept date in that record.

The server 211 generates a synthesized Web page informing the accept number and the accept date and transmits the Web page to the user terminal 29. The server 211 may notify the information by e-mail or FAX.

The server 211 accesses the repair information DB 239 every given period to extract those apparatuses whose repair requests have been accepted but which have not been received yet (those apparatuses whose receipt dates have not been registered yet). The server 211 discriminates the locations of the individual extracted apparatuses from the client IDs and branch codes of the extracted apparatuses. The server 211 then determines a route with the best efficiency to collect those apparatuses area by area and makes a visiting time schedule to visit the individual clients. At this time, the server 211 refers to a latest map and latest traffic information registered in the related information DB 243.

The server 211 transmits the generated visiting time schedule to the transport section terminal 253. The person in charge of transport checks the schedule with the transport section terminal 253, manually corrects the schedule as needed, and transmits the settled schedule to the server 211.

Upon reception of the settled schedule, the server 211 notifies each visiting destination of the scheduled visiting time according to the schedule by e-mail, FAX or the like.

The person in charge of transport visits each client in accordance with the settled schedule and collects the apparatuses whose repair has been requested. The person in charge of transport has the portable type transport section terminal 253 that has a radio communication capability and a label printer. Upon reception of the apparatus to be repaired from each client, the person in charge of transport logs in the server 211 by operating the portable transport section terminal 253 and enters information on the received apparatus. The server 211 registers information on the receipt date in the repair information DB 239 based on the input information. At this time, the client may be allowed to input the ID, the branch code and password (secret to the person in charge of transport) which may be used as confirmation information for the client and may be registered in the repair information DB 239 together with information on the receipt date.

The server 211 transmits an instruction to print a label to the transport section terminal 253. In response to the instruction, the transport section terminal 253 prints a label which shows information specifying the received apparatus.

The person in charge of transport affixes the printed label to the received apparatus.

The person in charge of transport brings in the received apparatus to the repair center at the contract repair company 25.

The person in charge of transport reads an ID code shown on the label affixed to the apparatus to be repaired that has been brought into the repair center using the label reader of the transport section terminal 253 provided at the repair center, and notifies the server 211 of the read ID code.

The server 211 sets information on the date of delivery at the repair center in a record which is specified by the notified ID code.

The person in charge of repair at the contract repair company 25 determines the status of the received apparatus and the business of the current work and determines whether each apparatus is to be repaired locally or the maker 27 is to be requested to repair the apparatus.

The person in charge of repair at the contract repair company 25 logs in the server 211 by operating the repair section terminal 255 and enters information indicating whether each apparatus delivered is to be repaired locally or the maker is to be requested to repair the apparatus. To specify the apparatus to be repaired at this time, the ID code shown on the label affixed to the apparatus using the label reader of the repair section terminal 255.

The server 211 sets a flag which indicates whether to make a repair at the repair center or at the maker in each associated record in the repair information DB 239.

At a given timing, the server 211 extracts those of the apparatuses registered in the repair information DB 239 for which makers are in charge of their repair but which have not been shipped to the maker yet (those apparatuses whose dates of delivery to the makers have not been registered yet). The server 211 makes a schedule to deliver the extracted apparatuses to the individual makers and transmits the schedule to the transport section terminal 253. The person in charge of transport checks the schedule with the transport section terminal 253, manually corrects the schedule as needed, and notifies the server 211 of the settled schedule.

In accordance with the notified schedule, the server 211 informs a delivery schedule to the repair section terminal 273 of each maker 27. Upon notification of the schedule, the person in charge of repair at each maker 27 starts preparing the reception of the apparatus to be repaired.

The person in charge of transport delivers each apparatus to be repaired to the repair section of the associated maker 27.

At the time of receiving the apparatus to be repaired, the person in charge of repair at the maker 27 reads the ID information on the label affixed to the apparatus by using the label reader of the repair section terminal 273. The repair section terminal 273 notifies the server 211 of the read ID information. The server 211 registers, in the repair information DB 239, information on the date of receipt at the maker in a record which is specified by the notified ID information.

The persons in charge of repair at the contract repair company 25 and the maker 27 repair the respective apparatuses whose repair has been requested.

The repair work is carried out as follows.

First, the person in charge of repair makes a schedule of the scheduled dates to start repairing individual apparatuses and notifies the server 211 of the schedule. The server 211 registers the scheduled dates to start repairing individual apparatuses in the repair information DB 239.

At the time a repair is initiated, the person in charge of repair reads the ID information on the label affixed to the apparatus using the label reader of the repair section terminal 273, and notifies the server 211 of the ID information together with information indicating that the repair has started. In response to the notification, the server 211 registers information on the date at which the repair has started in the repair information DB 239. The person in charge of repair at the contract repair company 25 access the apparatus DB 237 and refers to the repair manual as needed.

When the repair is completed, the person in charge of repair notifies the server 211 of the ID information read from the label affixed to the apparatus and information indicating that the repair has been completed. In response to the notification, the server 211 registers information on the completion date of the repair in the repair information DB 239.

When the server 211 is notified of the information on the completion date of the repair from the maker 27, the server 211 informs the transport section terminal 253 at the contract repair company 25 of information of the apparatus whose repair has been completed.

The person in charge of transport at the contract repair company 25 receives the repaired apparatus from the maker 27. At this time, the person in charge of transport reads the ID information on the label affixed to the apparatus using the portable transport section terminal 253 and notifies the 1of the read ID information together with information indicating that the apparatus is to be collected from the maker. In accordance with the notification, the server 211 registers information on the date of delivery to the maker in the repair information DB 239.

When the repaired apparatus is delivered to the repair center of the contract repair company 25, the person in charge of transport reads the ID information on the label affixed to the apparatus using the label reader of the transport section terminal 253 located at the repair center. The transport section terminal 253 notifies the server 211 of the read ID information. The server 211 specifics an apparatus from the notified information and registers the date of receipt at the repair center in the repair information DB 239.

The server 211 accesses the repair information DB 239 every given period to extract those apparatuses which have been repaired but whose scheduled dates of delivery have not been registered yet. The server 211 determines the places to return the individual repaired apparatuses from the client IDs and branch codes of the extracted repaired apparatuses. The server 211 then determines a route with the best efficiency to deliver those apparatuses area by area and makes a visiting time schedule to visit the individual clients. At this time, the server 211 refers to a latest map and latest traffic information registered in the related information DB 243.

The server 211 provides the transport section terminal 253 with the generated delivery schedule. The person in charge of transport checks the schedule with the transport section terminal 253, corrects the schedule as needed, and notifies the server 211 of the settled schedule.

The server 211 notifies each client of the scheduled date of delivery according to the notified schedule by e-mail, FAX or the like, and registers the scheduled date of delivery in the repair information DB 239.

The person in charge of transport delivers the repaired to each client. Upon delivery of the apparatus to the client, the person in charge of transport reads the ID information printed on the label affixed to the apparatus using the label reader of the portable transport section terminal 253. The portable transport section terminal 253 notifies the server 211 of the read ID information and information indicating that the apparatus has been delivered to the client. For the apparatus that is specified by the notified ID information, the server 211 registers the date of delivery to the client in the repair information DB 239. Finally, the person in charge of transport removes the label from the apparatus delivered to the client.

The server 211 screens the repair information DB 239 regularly to extract those apparatuses which have been delivered to clients but whose bills have not been processed yet.

Based on the extracted information, the server 211 generates bills client by client and maker by maker, and transmits the bills in the form of electronic data to the management section terminals 271 of the individual makers 27 and the user terminals 29. The server 211 registers the generated bills in the account information DB 241.

When there is a deposit from each maker 27 or client, the person in charge of accounting at the contract repair company 25 operates the management section terminal 251 and performs a clearing process for each bill.

Each client who has requested a repair can adequately check the repair progress status.

In this case, the repair requester accesses the ASP system 21 by operating the user terminal 29, goes through a predetermined authentication process and then notifies the server 211 of the accept number that has been notified at the time the repair request was made.

The server 211 searches the repair information DB 239 using the accept number as a key to read information, such as the person in charge of repair, the date of delivery to the maker, the date of receipt at the maker, the scheduled date to start the repair, the actual date at which the repair has started, the completion date of the repair, the date of delivery to the maker, the date of receipt at the repair center and the scheduled date of delivery, and provides the user terminal 29 with the information.

While the authentication of the user is carried out based on the aforementioned ID and password, the authentication of other apparatuses can be accomplished by apparatus authentication which uses IDs specific to the apparatuses or authentication by telephone numbers in case where apparatuses are portable telephone terminals. In general, it is desirable for a worker to use an authentication scheme which does not require a work of entering an ID or password.

A branch which actually receives apparatuses to be repaired from clients may be placed under each repair center, In this case, the server 211 prepares a collection schedule for each branch based on the location of the branch and the location of a client and notifies the branch of the schedule. Each branch receives apparatuses according to the notified schedule. Next, each branch registers information on the received apparatuses in the server 211.

The server 211 makes a plan to deliver apparatuses to the repair center from each branch based on the registered information and notifies the person in charge of transport of the plan. The person in charge of transport delivers the apparatuses to the repair center from each branch. A process for the apparatuses that have been delivered to the repair center is the same as the one described earlier. Each branch may intervene at the time of returning repaired apparatuses to clients.

The invention is not limited to the first and second embodiments that have been described above, but may be modified and adapted in various other forms.

The entire software program that constitutes the above-described system or a part thereof may be stored in a recording medium, such as CD-ROM, magneto optical disk, DVD-ROM, FD, flash memory or other various types of ROMs and RAMs, and distributed in that form. Further, the program may be superimposed on the carrier and transmitted over a network.

Various embodiments and changes may be made thereonto without departing from the broad spirit and scope of the invention. The above-described embodiments are intended to illustrate the present invention, not to limit the scope of the present invention. The scope of the present invention is shown by the attached claims rather than the embodiments. Various modifications made within the meaning of an equivalent of the claims of the invention and within the claims are to be regarded to be in the scope of the present invention.

## Claims

1. An apparatus repairing method for executing a repair service of registering clients and apparatuses held by said clients in a database (6,7,231), receiving an apparatus to be repaired designated by a client and delivering said apparatus to be repaired after repair in accordance with a request made by said client, **characterized by** comprising:
a step of allowing a plurality of apparatuses which arc to be repaired at different sections to be registered in said database (6,7,231) as apparatuses to be subjected to said repair service;
a step of coping with a repair request made by each client at a predetermined window organ regardless of a section that repairs an apparatus to be repaired whose repair has been requested; and
a step of executing a process of extracting a repair section for said apparatus to be repaired by referring to said database (6,7,231) and further executing a process of receiving said apparatus to be repaired from said client using information registered in said database (6,7,231), a process of arranging repair and a process of delivering a repaired apparatus to said client, in response to said repair request made by said client.

2. The apparatus repairing method according to claim 1, **characterized in that** said step of coping with a repair request made by each client acquires information indicating said request from said client at a terminal manually or over a network. (NW, IN) and transmits said information indicating said request from said client to a server over said network, and
said process executing step allows said server to extract client information of said client who has made request information from said database (6,7,231) and to provide a terminal of an apparatus receiving section with said extracted client information and said request information, so that a person in charge at said apparatus receiving section can arrange reception of an apparatus by referring to what is displayed on said terminal.

3. The apparatus repairing method according to claim 1, **characterized in that** said window organ, a receiving section which performs a process of receiving an apparatus to be repaired from a client, a repair arranging section which arranges a repair and a delivering section which arranges delivery of an apparatus after repair are provided at an agency which carries out at least part of management of said repair service on behalf of an operation management organ which carries out said repair service.

4. The apparatus repairing method according to claim 3, **characterized in that** said agency bills said operation management organ for fees relating to reception, repair and delivery of said apparatus as a repair clearing fee over said network, and said operation management organ pays said repair clearing fee to said agency in accordance with that bill.

5. The apparatus repairing method according to claim 3, **characterized in that** said agency sends reception confirmation information obtained from a client at a time of delivering a repaired apparatus together with a bill for said repair clearing fee for each delivery process or collectively over a predetermined period to said operation management organ, and
said operation management organ checks said sent reception confirmation information and information on said sent bill and inputs necessary information to an account transaction system in operation, whereby said account transaction system executes a transaction for payment to said agency.

6. The apparatus repairing method according to claim 3, **characterized by** further comprising the steps of:
accepting a subscription application and registering subscription application information in said database; and
allowing said subscription application information registered in said database (6,7,231) to be supplied to a terminal of said operation management organ in a referable fashion and ensuring collection of a contract fee from said client.

7. The apparatus repairing method according to claim 6, **characterized in that** a process of collecting said contract fee inputs sales information originated from a contract to an order entry system provided beforehand for receiving and placing orders for goods, transfers said sales information from said order entry system to a sales/credit management system provided beforehand for sales/credit management and sends a bill to a client through said sales/credit management system.

8. The apparatus repairing method according to claim 1, **characterized by** further comprising the steps of:
registering progress information for each of processes from acceptance of a repair of an apparatus to delivery of a repaired apparatus to a client in said database (6,7,231); and
reading said progress information registered in said database (6,7,231) and providing said progress information in a referable fashion.

9. A repair service provision assisting system for executing a repair service of receiving an apparatus to be repaired from a client, repairing said apparatus to be repaired and delivering said repaired apparatus to said client in accordance with a request made by said client, **characterized by** comprising:
a database (6,7,231) which registers information on apparatuses held by said client even for those apparatuses which are to be repaired at different sections; and
a server (1, 211) which accepts a repair request made by each client, acquires information on an apparatus to be repaired by referring to said database (6,7,231) and executes a process of receiving said apparatus to be repaired, a process of repairing said apparatus to be repaired and a process of delivering a repaired apparatus to said client

10. The repair service provision assisting system according to claim 9, **characterized by** further comprising a window organ (3,231) which accepts repair requests for a plurality of apparatuses from a plurality of clients and a terminal for a person in charge at an apparatus receiving section who carries out a work of receiving apparatuses from said clients, and wherein
a request accepted at said window organ is transmitted to said server (1, 211), and
said server (1, 211) extracts client information corresponding to request information by referring to said database (6, 7, 231) and transmits said extracted client information and said request information to said terminal (2, 3, 253)of said person in charge, thereby allowing said person in charge at said apparatus receiving section to refer to said extracted client information and said request information so that said person in charge can arrange reception of an apparatus.

11. The repair service provision assisting system according to claim 9, **characterized by** further comprising a reception terminal (2, 3, 211) which accepts repair requests for a plurality of apparatuses from a plurality of clients and a terminal (2, 3, 253) for a person in charge at an apparatus receiving section who carries out a work of receiving apparatuses from said clients, and wherein
said reception terminal (2, 3, 253) accepts request information from said clients over a network (NW, IN) and transfers said request information to said server (1, 211) over said network (NW, IN), and
said server (1, 211) extracts client information corresponding to request information by referring to said database (6, 7, 231)and transmits said extracted client information and said request information to said terminal of said person in charge, thereby allowing said person in charge at said apparatus receiving section to refer to said extracted client information and said request information so that said person in charge can arrange reception of an apparatus.

12. The repair service provision assisting system according to claim 9, **characterized in that** at least one of a window organ which accepts a repair request for an apparatus, a receiving section which receives from a client an apparatus whose repair has been requested, a repair arranging section which arranges a repair of said apparatus and a delivering section which arranges delivery of said repaired apparatus are provided at an agency on behalf of an operation management organ which carries out said repair service.

13. The repair service provision assisting system according to claim 12, **characterized by** further comprising a billing unit (8,211) which bills said operation management organ for a consideration corresponding to a service provided by said agency as a repair clearing fee over a network (NW, IN), and
wherein said operation management organ pays said repair clearing fee to said agency in accordance with that bill.

14. The repair service provision assisting system according to claim 13, **characterized in that** said billing unit (8, 211) sends reception confirmation information obtained from a client at a time of delivering a repaired apparatus together with a bill for said repair clearing fee for each delivery process or collectively over a predetermined period to said operation management organ, and
said operation management organ includes a payment unit which allows an account transaction system in operation to execute a transaction for payment to said agency based on said sent reception confirmation information and information on said sent bill.

15. The repair service provision assisting system according to claim 9, **characterized by** further comprising a reception section which accepts subscription application information, and wherein
said server registers said subscription application information accepted at said reception section in said database so that said subscription application information is referable,
entry of predetermined approval information is accepted, and
collection of a contract fee from said client is executed after said approval information is input.

16. The repair service provision assisting system according to claim 15, **characterized by** further comprising:
an order entry system (8) which enters reception and placing order information for goods and sales information and transfers said entered information; and
an management unit (11) which sends a bill to a client upon reception of information from said order entry system.

17. The repair service provision assisting system according to claim 9, **characterized by** further comprising a section which registers a progress status of said repair service and provides information on said progress status in accordance with a request.

18. A computer program for causing a computer to execute entirely or partly the method recited in claim 1.

19. A computer program for causing a computer to operate as said server recited in claim 9.
